**Europäisches Patentamt**

**European Patent Office**

**Office européen des brevets**

(19)

(11) Veröffentlichungsnummer : **0 043 498**
**B1**

(12) # EUROPÄISCHE PATENTSCHRIFT

(45) Veröffentlichungstag der Patentschrift :
20.02.85

(21) Anmeldenummer : 81104869.3

(22) Anmeldetag : 24.06.81

(51) Int. Cl.⁴ : **H 02 K 7/102**, F 16 D 59/02,
F 16 D 59/00

(54) **Elektromotor.**

(30) Priorität : 25.06.80 DE 8016723 U
10.12.80 DE 8032798 U

(43) Veröffentlichungstag der Anmeldung :
13.01.82 Patentblatt 82/02

(45) Bekanntmachung des Hinweises auf die Patenterteilung : 20.02.85 Patentblatt 85/08

(84) Benannte Vertragsstaaten :
AT CH FR LI

(56) Entgegenhaltungen :
CH-A- 375 424
DE-A- 1 959 587
DE-A- 2 307 716
DE-C- 534 319
DE-C- 602 851
DE-C- 887 373
DE-C- 1 136 545
FR-A- 437 609
FR-A- 829 327
FR-A- 950 042
FR-A- 1 211 278
FR-A- 1 434 386
FR-A- 1 449 053
FR-A- 2 305 328
FR-A- 2 338 602
FR-A- 2 366 734
US-A- 1 932 970
US-A- 2 175 897
US-A- 3 662 197
US-A- 3 810 056
US-A- 4 009 770

(73) Patentinhaber : **Stahlschmidt, Robert**
**Kafkastrasse 41**
**D-4800 Bielefeld 16 (DE)**

(72) Erfinder : **Stahlschmidt, Robert**
**Kafkastrasse 41**
**D-4800 Bielefeld 16 (DE)**

(74) Vertreter : **Hoefer, Theodor, Dipl.-Ing.**
**Kreuzstrasse 32**
**D-4800 Bielefeld 1 (DE)**

## Beschreibung

Die Erfindung betrifft einen Elektromotor mit eingebauter Federdruckbremse, die einen in axialer Richtung der Rotorwelle verschiebbaren Bremskörper enthält, welcher im ausgeschalteten, stromlosen Zustand des Motors von einer Druckfeder an eine Bremmsscheibe andrückbar und im eingeschalteten Zustand über parallel zur Achse der Statorbohrung angeordnete und jeweils mit einem Ende am Stator befestigte Magnetleitkörper von dem Magnetfeld des Stators an diesen angezogen ist.

Ein solcher Elektromotor ist aus der französischen Patentschrift 829 327 bekannt. Er bietet den Vorteil nur sehr kurzer Nachlaufzeiten und Nachlaufwege. Die Bremskraft wird mit Hilfe der Feder erzeugt. Erst wenn der Motor eingeschaltet wird und sein Strom fließt, wird die Bremse gelöst. Bei diesem System ist die Bremswirkung immer dann vorhanden, wenn kein Strom fließt, sie ist also auch wirksam, wenn ein unbeabsichtiger Stromausfall wirksam wird. Daher kann eine solche Federdruckbremse als Sicherheitseinrichtung für den damit ausgerüsteten Elektromotor angesehen werden.

Da die magnetische Zugkraft proportional zum Quadrat der Induktion ist, hat bei Wechselstrommaschinen der Richtungswechsel des Stromes keinen Einfluß auf das momentane Anzugsverhalten. Da jedoch die Anzugskraft bei Wechselstrom mit der doppelten Netzfrequenz pulsiert, kann der vorzugsweise unter Einwirkung der Druckfeder als mechanischer Gegenkraft stehende Bremskörper im Rhythmus der doppelten Erregerfrequenz sich hin- und herbewegen und somit klappern.

Der Erfindung liegt die Aufgabe zugrunde, eine gut wirksame Federdruckbremse möglichst einfacher konstruktiver Ausgestaltung für den Elektromotor zu schaffen, mit welcher Klapper- oder Brummgeräusche infolge von Schwingungen der von der Druckfeder beaufschlagten Bremsscheibe vermieden sowie ein schnelles Auswechseln von Verschleißteilen ermöglicht wird.

Diese Aufgabe wird erfindungsgemäß dadurch gelöst, daß jeder Magnetleitkörper aus einem Einzelsegment oder mehreren zusammengesetzten Einzelsegmenten besteht und an seinem dem Bremskörper zugewandten Ende mit einem als Kurzschlußwindung wirkenden Metallring umgeben ist. Auf diese Weise wird ein Klappern oder Brummen des Bremskörpers verhindert, da eine zweite, zu dem Hauptmagnetfeld zeitlich phasenverschobene Magnetflußkomponente erzeugt wird, die in Verbindung mit dem Hauptmagnetfeld die Zugkraft nicht auf den Nullwert absinken läßt. Der Metallring ist bevorzugt aus Kupfer hergestellt. Die von ihm gebildete Kurzschlußwindung erzeugt eine induktive Gegenspannung und somit eine Abfallverzögerung des Bremskörpers, die beim Bremsvorgang jedoch vernachlässigbar ist, da es sich bei der vorliegenden Erfindung lediglich um eine Auslaufbremse handelt.

Durch die konstruktive Vereinigung von Motor und Bremse ergibt sich eine aufwandsarme, kleinbauende und kostengünstige Lösung. Ein Teil des Magnetflusses wird von der Statorwicklung über die Magnetleitkörper an dem Statorblechpaket stirnseitig abgeleitet, so daß er auf den Bremskörper einwirken kann. Das in dem erfindungsgemäßen Elektromotor vorhandene Magnetfeld wird somit für das Lösen der eingebauten Federdruckbremse ausgenutzt, so daß die Bremse kein eigenes Magnetfeld benötigt.

Bevorzugt ist der Bremskörper als ebene rechteckige Ankerplatte mit zwei an ihren Enden angeordneten und der Bremsscheibe zugewandten Reibbelägen ausgebildet, wobei durch die mittlere Bohrung der Ankerplatte eine Rotorwelle hindurch verläuft. Die Ankerplatte weist bevorzugt zwei zur Achse der Bohrung symmetrische Ausnehmungen auf, in welche zwei zugeordnete, am Motorgehäuse befestigte Nocken eingreifen, wobei jeder Nocken für die Anlage der Ankerplatte mit einer abgeschrägten Auflauffläche versehen ist. Die Bauteile der Bremse sind also so ausgebildet, daß während des Bremsvorganges eine Servowirkung durch die Nocken mit abgeschrägter Auflauffläche entsteht, so daß zum Lösen der Bremse nur geringe Kräfte erforderlich sind und die Druckfeder infolgedessen entsprechend schwach ausgeführt sein kann. Die in axialer Richtung der Rotorwelle verschiebbare Ankerplatte mit den Bremsbelägen wird bei der Einleitung des Bremsvorganges, also nach Abschaltung der Betriebsspannung, mittels der Federkraft gegen die Bremsscheibe gepreßt, die sich mit der Rotorwelle dreht, und anschließend durch eine vom Reibschluß der Reibbeläge bewirkte Tangentialbewegung, bezogen auf die Rotationsachse des Motors, mit Hilfe der im formschlüssigen Eingriff stehenden, an den am Motorgehäuse fest angeordneten Nocken ausgebildeten Auslaufflächen, in seiner Bremskraft verstärkt.

Ausführungsbeispiele der Erfindung sind in den Zeichnungen dargestellt und werden im folgenden näher beschrieben. Es zeigen :

Figur 1 einen erfindungsgemäßen Motor mit teilweisem Axialschnitt ;

Figur 2 den Schnitt gemäß Linie II-II der Fig. 1 ;

Figur 3 eine stirnseitige Ansicht eines Magnetleitkörpers ;

Figur 4 eine andere Ausführungsform eines erfindungsgemäßen Motors mit teilweisen Axialschnitt ;

Figur 5 eine stirnseitige Ansicht des Hauptfeldes des Motors gemäß Fig. 4 mit daran angeordneten Magnetleitkörpern ;

Figur 6 eine die Auflauffläche zeigende Seitenansicht der Bremseinrichtung ;

Figur 7 einen Schnitt durch eine Ausführungsform des Magnetleitkörpers.

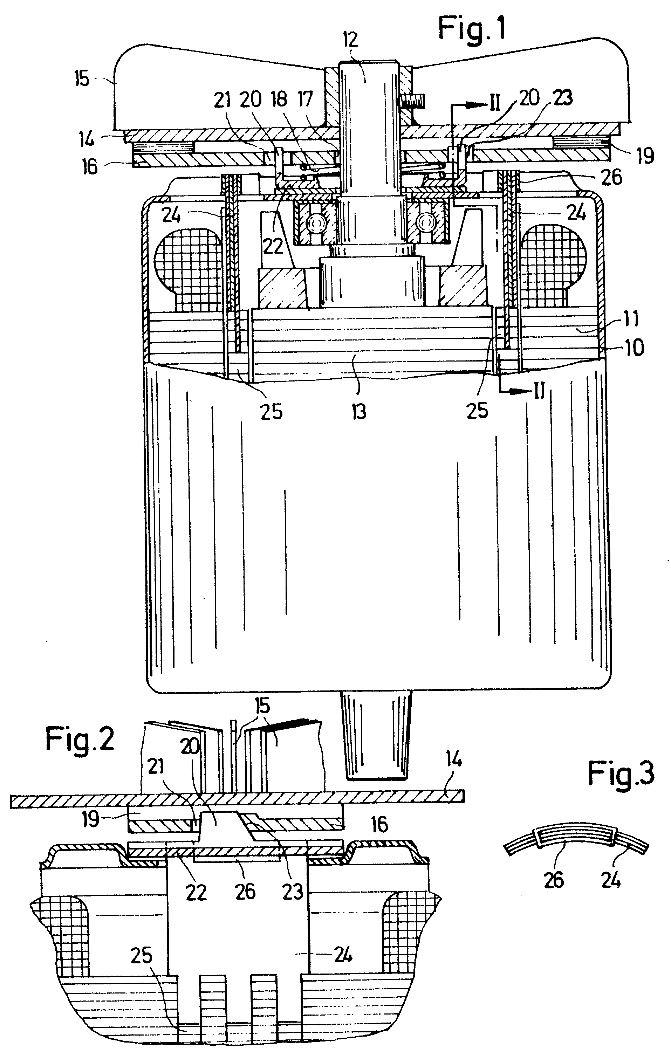

Der erfindungsgemäße Elektromotor gemäß Fig. 1 bis 3 der Zeichnung weist innerhalb seines Gehäuses 10 einen festen Stator 11 und einen in der zentralen Statorbohrung an einer Rotorwelle 12 drehbar gelagerten Rotor 13 auf. An einer Stirnseite ist auf die Rotorwelle 12 ein als Bremmscheibe 14 wirkendes Lüfterrad mit Lüfterschaufeln 15 fest aufgesezt. Das Lüfterrad ist somit Teil der in den Elektromotor eingebauten Federdruckbremse.

Die Federdruckbremse besteht aus einer zwischen der Bremscheibe 14 und dem Gehäuse 10 an der Stirnseite des Motors angeordneten Ankerplatte 16, durch deren mittlere Bohrung 17 die Rotorwelle 12 hindurch verläuft. Die Ankerplatte 16 kann sich in axialer Richtung der Rotorwelle 12 geringfügig hin- und herbewegen. Sie wird von einer Druckfeder 18, die zwischen der Ankerplatte 16 und der Stirnseite des Gehäuses 10 eingebaut ist, an die Bremsscheibe 14 gedrückt, an welcher sie sich über ihre Reibbeläge 19 abstützt.

Die Ankerplatte 16 kann sich nur geringfügig um die Achse der Rotorwelle 12 drehen. Sie wird von zwei Nocken 20 gehalten, die in Ausnehmungen 21 der Ankerplatte 16 hineinragen. Die Nocken 20 sind Teil einer an der Stirnseite des Gehäuses 10 befestigten Nockenplatte 22, sie haben also an dem Gehäuse eine feste Position. Jeder Nocken 20 ist mit einer abgeschrägten Auflauffläche 23 versehen, an welcher sich eine angepaßte Fläche der Ankerplatte 16 innerhalb der Ausnehmung 21 anlegt, wenn die Bremse tätig wird, wenn also die Reibbeläge 19 an der sich drehenden Bremsscheibe 14 anliegen, so daß auf diese Umfangsreibkräfte in Bezug auf die Achse der Rotorwelle 12 Einwirken. Diese schrägen Auflaufflächen 23 und die zugeordneten schrägen Flächen der Ankerplatte 16 unterstützen daher die Kraft der Druckfeder 18 und somit den Bremsvorgang.

Zum Lösen der Bremse muß auf die Ankerplatte 16 eine Kraft einwirken, die die Anpreßkraft der Druckfeder 18 überwindet. Zu diesem Zweck wird ein Teil des Magnetflusses des Stators 11 mit Hilfe mit Magnetleitkörpern 24 an der Stirnseite des Gehäuses 10 des Elektromotors zur Ankerplatte 16 hin abgeleitet. Die Ankerplatte 16 wird also magnetisch an das Gehäuse 10 angezogen, wenn an den Elektromotor eine Spannung angelegt wird, so daß dieser seinen Betrieb beginnt. Die Magnetleitkörper 24 sind in Form von Segmenten ausgebildet, die den Rotor 13 im Bereich seiner einen stirnseitigen Lagerstelle konzentrisch umgeben. Insgesamt sind für jeden Magnetleitkörper 24 drei parallele Einzelsegmente so zusammengesetzt, daß sie ein Paket bilden. Jeder Magnetleitkörper 24 ist mit seinem von der Ankerplatte 16 abgewandten, innerhalb des Elektromotors befindlichen Ende in Statornuten 25 Eingesteckt und wird dort festgehalten. Die Nuten 25 sind jeweils in dem Statorblechpaket an der dem Rotor 13 zugewandten inneren Oberfläche des Stators 11 angeordnet.

Jeder Magnetleitkörper 24 ist mit einem Metallring 26 versehen, der die phasenverschobene Magnet-flußkomponente erzeugt, um das Entstehen von Brummgeräuschen der Ankerplatte 16 zu verhindern. Der Metallring 26 ist jeweils an der Stirnseite des Magnetleitkörpers 24, die auf die Ankerplatte 16 gerichtet ist, auf den mittleren Teil des Magnetleitkörpers 24 aufgesetzt. Er kann aus Kupferblech bestehen.

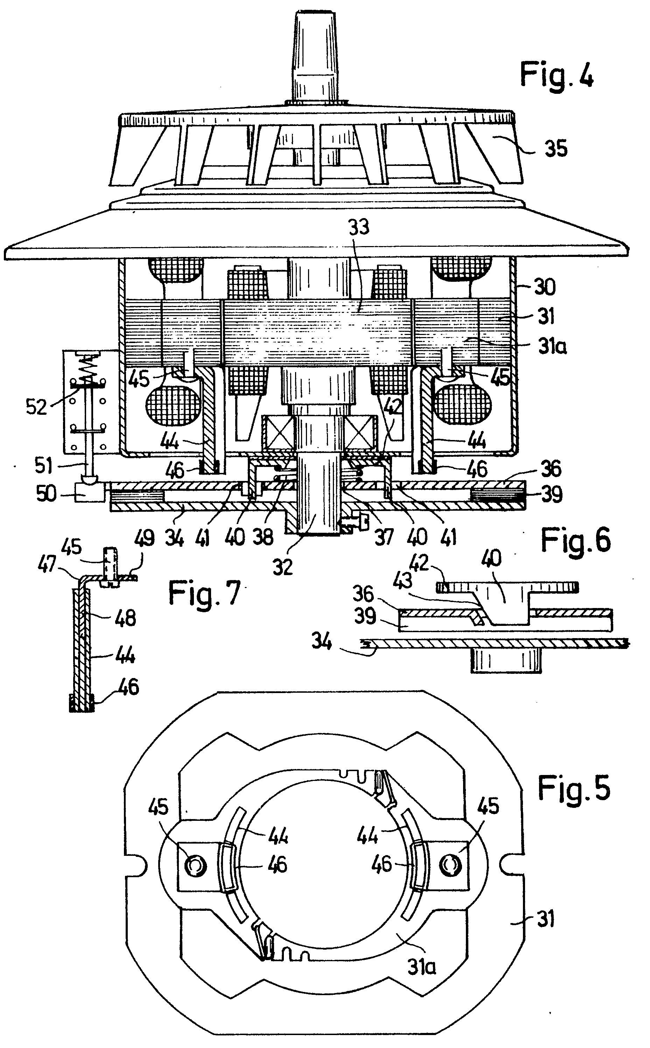

Der erfindungsgemäße Spaltpol-Elektromotor gemäß Fig. 4 bis 7 der Zeichnung ist grundsätzlich genauso aufgebaut. Er weist innerhalb seines Gehäuses 30 einen festen Stator 31 und einen in der zentralen Statorbohrung an einer Rotorwelle 32 drehbar gelagerten Rotor 33 auf. An einer Stirnseite ist auf die Rotorwelle 32 ein Lüfterrad mit Lüfterschaufeln 35 fest aufgesetzt.

Auf der gegenüberliegenden Stirnseite des Motors lagert auf der Rotorwelle 32 eine Federdruckbremse. Diese besitzt eine äußere, auf der Rotorwelle 32 befestigte Bremsscheibe 34 und eine zwischen dem Gehäuse 30 und der Bremsscheibe geordnete Ankerplatte 36, durch deren mittlere Bohrung 37 die Rotorwelle 32 hindurch verläuft. Die Ankerplatte 36 kann sich in axialer Richtung der Rotorwelle 32 geringfügig hin- und herbewegen. Sie wird von einer Druckfeder 38, die zwischen der Ankerplatte 36 und der Stirnseite des Gehäuses 30 eingebaut ist, an die Bremsscheibe 34 gedrückt, an der sie sich über ihre Reibbeläge 39 abstützt.

Die Ankerplatte 36 kann sich nur geringfügig um die Achse der Rotorwelle 32 drehen. Sie wird von zwei Nocken 40 gehalten, die in Ausnehmungen 41 der Ankerplatte 36 hineinragen. Die Nocken 40 sind Teil einer an der Stirnseite des Gehäuses 30 befestigten Nockenringplatte 42, die in die Wand des Gehäuses 30 integriert sein kann. Die Nocken 40 haben damit an dem Gehäuse 30 eine feste Position. Jeder Nocken 40 ist mit einer abgeschrägten Auflauffläche 43 versehen, an welche sich eine angepaßte Fläche der Ankerplatte 36 innerhalb der Ausnehmung 41 anlegt, wenn die Bremse tätig wird, wenn also die Reibbeläge 39 an der sich drehenden Bremsscheibe 34 anliegen, so daß auf diese Umfangsreibkräfte in Bezug auf die Achse der Rotorwelle 32 einwirken. Diese schrägen Auflaufflächen 43 und die zugeordneten schrägen Flächen der Ankerplatte 36 unterstützen daher die Kraft der Druckfeder 38 und somit den Bremsvorgang.

Zum Lösen der Bremse muß auf die Ankerplatte 36 eine Kraft einwirken, die die Anpreßkraft der Druckfeder 38 überwindet. Zu diesem Zweck wird ein Teil des Magnetflusses des Stators 31 mit Hilfe von Magnetleitkörpern 44 an der Stirnseite des Gehäuses 30 des Elektromotors zur Ankerplatte 36 hin abgeleitet. Die Ankerplatte 36 wird also magnetisch in Richtung des Gehäuses 30 angezogen, wenn an den Elektromotor eine Spannung angelegt wird, so daß dieser seinen Betrieb beginnt. Die Magnetleitkörper 44 sind in Form von Segmenten ausgebildet, die den Rotor 33 im Bereich seiner einen stirnseitigen Lagerstelle konzentrisch umgeben. Es können für jeden Magnetleitkörper 44 ein, vorzugsweise drei parallele Einzelsegmente auf diese Weise zusammengesetzt sein und ein Paket bilden. Im vorliegenden Ausführugnsbeispiel sind die Magnetleitkörper 44 jedoch aus Vollmaterial gebildet. Jeder Magnetleitkörper 44 ist mit seinem von der Ankerplatte 36 abgewandten, innerhalb des Elektromotors befindlichen Ende abgewinkelt und mittels Schrauben 45, Nieten oder dergleichen auf dem Hauptfeld 31a des Statorblechpaketes 31 befestigt.

Jeder Magnetleitkörper 44 ist mit einem Metallring 46 versehen, der die phasenverschobene Magnetflußkomponente erzeugt, um das Entstehen von Brummgeräuschen der Ankerplatte 26 zu verhindern. Der Metallring 46 ist jeweils an der Stirnseite des Magnetleitkörpers 44, die auf die Ankerplatte 36 gerichtet ist, auf den mittleren Teil des Magnetleitkörpers 44 aufgesetzt. Er kann aus Kupferblech bestehen.

Bei senkrechter Anordnung des Spaltpolmotors kann die Druckfeder 38 entfallen, sofern das Eigengewicht der Ankerplatte 36 die Mitnahme durch die Bremsscheibe 34 sicherstellt.

Der Magnetleitkörper 44 gemäß Fig. 7 der Zeichnung ist aus einzelnen Blechplatten zu einem Paket zusammengesetzt und auf einen Schenkel 48 eines Winkelteiles 47 aufgesteckt. Dabei ist die mittlere Blechplatte etwas kürzer gehalten, so daß ein Einsteckschlitz entsteht, in welchen der Schenkel 48 eingreift. Der andere Schenkel 49 des Winkelteiles 47 wird an dem Hauptfeld 31a des Stators 31 mit Hilfe von Schrauben 45, Nieten, oder dergleichen, oder durch Schweißen befestigt.

An der Ankerplatte 36 mit den Reibbelägen 39 befindet sich gemäß Fig. 4 der Zeichnung am äußeren Umfang eine Schaltkurve 50, welche mit einem Betätigungsorgan 51 eines am Gehäuse 30 befestigten Schalters 52 in Berührung steht. Dieser als Signal-, Schalt- oder Verriegelungseinrichtung oder dergleichen ausgebildete Schalter 52 wird nach Einleitung des Bremsvorganges, also wenn nach der Abschaltung der Betriebsspannung die Ankerplatte 36 mit den Reibbelägen 19 an die Bremsscheibe 34 gedrückt wird, durch die vom Reibschluß der Bremselemente bewirkte geringfügige Drehung der Ankerplatte 36 um die Drehachse der Rotorwelle 32 betätigt, indem die Schaltkurve 50 an dem Betätigungsorgan 51 Entlanggleitet und dieses dabei in dessen Längsrichtung verschiebt. Das Betätigungsorgan 51 wird solange verschoben gehalten, wie die Ankerplatte 36 mit den Reibbelägen 39 eine Bremskraft auf die Bremsscheibe 34 überträgt. Danach erfolg im Stillstand eine selbsttätige Rückstellung, die gegebenenfalls mit einer Rückholfeder verstärkt werden kann. Als Rückholfeder kann auch die das Bremsmoment einleitende Druckfeder 38 dienen, wenn sie gleichzeitig als Schlingfeder ausgebildet ist.

Diese Signal-, Schalt- oder Verriegelungseinrichtung hat den Vorteil, daß eine einfach aufgebaute und sicher wirkende Anlaß- und Bremsvorrichtung insbesondere für solche Geräte geschaffen wird, deren umlaufende Werkzeuge, wie Messer, Sägen oder deren umlaufende Zentrifugen durch verriegelbare Abdeckungen geschützt werden müssen. Diese Signal-, Schalt- oder Verriegelungseinrichtung ermöglicht eine Zwangsverriegelung der Sicherheitsabdeckung und schließt einen ungeschützten Betrieb der Anlage aus. Eine solche Sicherheits-, Anlaß- und Bremsvorrichtung nutzt die axialen und radialen Bewegungsabläufe bei Betrieb sowie die Ruhestellung der Sicherheitsbremse also dazu aus, die Zwangsverriegelung oder Entriegelung der Sicherheitseinrichtungen wie Sicherheitsabdeckungen, Schalter, Schütze, oder dergleichen durchzuführen. Durch die konstruktive Verschmelzung von Motor, Bremse und Sicherheitsschalteinrichtungen ergibt sich eine aufwandsarme, kleinbauende und kostengünstige Lösung. Bei Öffnung der Sicherheitsabdeckungen oder bei Ausfall der Spannung oder Abschaltung der Spannung wird die sofortige Bremsung bewirkt und ein Anlaufen des Elektromotors zur Unzeit verhindert.

## Ansprüche

1. Elektromotor mit eingebauter Federdruckbremse, die einen in axialer Richtung der Rotorwelle (12, 32), verschiebbaren Bremskörper (16, 36) enthält, welcher im ausgeschalteten, stromlosen Zustand des Motors von einer Druckfeder (18, 38) an eine Bremsscheibe (14, 34) andrückbar und im eingeschalteten Zustand über parallel zur Achse der Statorbohrung angeordnete und jeweils mit einem Ende am Stator (11, 31) befestigte Magnetleitkörper (24, 44) von dem Magnetfeld des Stators an diesen angezogen ist, dadurch gekennzeichnet, daß jeder Magnetleitkörper (24, 44) aus einem Einzelsegment oder mehreren zusammengesetzten Einzelsegmenten besteht und an seinem dem Bremskörper zugewandten Ende mit einem als Kurzschlußwindung wirkenden Metallring (26, 46) umgeben ist.

2. Elektromotor nach Anspruch 1, dadurch gekennzeichnet, daß die Magnetleitkörper (24) jeweils mit einem Ende parallel zur Achse der Statorbohrung in Statornuten (25) eingesteckt sind.

3. Elektromotor nach den Ansprüchen 1 und 2, dadurch gekennzeichnet, daß die Magnetleitkörper (44) an dem Hauptfeld (31a) des Stators (31) durch Schrauben (45), Nieten, o. dgl. befestigt sind.

4. Elektromotor nach den Ansprüchen 1 bis 3, dadurch gekennzeichnet, daß die Magnetleitkörper (44) auf an dem Stator (31) befestigte Winkelteile (47) aufgesteckt sind, welche mit Schrauben (45), Nieten, oder durch Schweißen an dem Stator (31) befestigt sind.

5. Elektromotor nach den Ansprüchen 1 bis 4, dadurch gekennzeichnet, daß der Bremskörper als Ankerplatte (16, 36) mit zwei an ihren Enden angeordneten und der Bremsscheibe (14, 34) zugewandten Reibbelägen (19, 39) ausgebildet ist, wobei durch die mittlere Bohrung (17, 37) der Ankerplatte (16, 36) die Rotorwelle (12, 32) hindurch verläuft.

6. Elektromotor nach den Ansprüchen 1 bis 5, dadurch gekennzeichnet, daß die Ankerplatte (16, 36) zwei zur Achse der Bohrung (17, 37) symmetrische Ausnehmungen (21, 41) aufweist, in welche zwei zugeordnete, am Motorgehäuse (10, 30) befestigte Nocken (20, 40) eingreifen, wobei jeder Nocken (20, 40) für die Anlage der Ankerplatte (16, 36) mit einer abgeschrägten Auflauffläche (23, 43) versehen ist.

7. Elektromotor nach den Ansprüchen 1 bis 6, dadurch gekennzeichnet, daß bei senkrechter Anordnung der Rotorwelle (12, 32) die Ankerplatte (16, 36) im stromlosen Zustand allein infolge ihres Eingengewichtes bremsend an der Bremsscheibe (14, 34) anliegt.

8. Elektromotor nach den Ansprüchen 1 bis 7, dadurch ge-kennzeichnet, daß am Gehäuse (30) ein Schalter (52) befestigt ist, dessen Betätigungsorgan (51) mit einer an der Ankerplatte (36) ausgebildeten Schaltkurve (50) in Berührung steht.

## Claims

1. An electric motor with an incorporated spring pressure brake which includes braking members (16, 36) which can be displaced in the axial direction of the rotor shaft which when the motor is switched off and without power can be pressed against a braking disc (14, 34) by means of a compression spring (18, 38) and when the motor is switched on are drawn towards magnetic conducting bodies (24, 44), located parallel to the axis of the stator cavity and each having one end secured to the stator (11, 13), by means of the magnetic field of the stator, characterised in that each magnetic conducting body (24, 44) consists of a single segment or several individual segments placed together and is surrounded at the end facing the braking members by a metal ring (26, 46) acting as a short-circuit coil.

2. An electric motor according to claim 1, characterised in that the magnetic conducting bodies (24) are each inserted in the stator groove (25) with one end parallel to the axis of the stator cavity.

3. An electric motor according to claims 1 and 2, characterised in that the magnetic conducting bodies (44) are secured to the main field (31a) of the stator (31) by bolts (45), rivets or the like.

4. An electric motor according to claims 1 to 3, characterised in that the magnetic conducting bodies (44) are inserted onto angular members (47) secured to the stator (31) by means of bolts (45), rivets or by welding to the stator (31).

5. An electric motor acording to claims 1 to 4, characterised in that the braking members are formed as anchor plates (16, 36) with two friction coverings (19, 39) placed at their ends and facing the braking disc (14, 34), the rotor shaft (12, 32) passing through the central hole (17, 37) in the anchor plates (16, 36).

6. An electric motor according to claims 1 to 5, characterised in that the anchor plates (16, 36) bear two recesses (21, 41) symmetrical to the axis of the hole (17, 37) which are engaged by two catches (20, 40) secured to the motor housing (10, 30), each catch (20, 40) being provided with an inclined guide surface (23, 43) for positioning the anchor plates (16, 36).

7. An electric motor according to claims 1 to 6, characterised in that when the rotor shaft (12, 32) is in a vertical position the anchor plates (16, 36) lie against the braking disc (14, 34) with a braking effect through their own weight when power is not applied.

8. An electric motor according to claims 1 to 7, characterised in that a switch (52) is secured to the housing (30), the activating member (51) thereof being in contact with a switching curve (50) formed on the anchor plate (36).

## Revendications

1. Moteur électrique avec frein à pression de ressort incorporé qui comporte un corps de frein (16, 36) pouvant coulisser dans la direction axiale de l'arbre de rotor (12, 32) et qui, dans l'état débranché et sans courant du moteur, peut être poussé par un ressort de compression (18, 38) contre un disque de frein (14, 34) et dans l'état branché, est attiré contre le stator (11, 31) par le champ magnétique de celui-ci, par l'intermédiaire de corps conducteurs magnétiques (24, 44) disposés parallèlement à l'axe de la perforation de stator et fixés chacun au stator (11, 31) par une extrémité, caractérisé par le fait que chaque corps conducteur magnétique (24, 44) est formé d'un segment individuel ou de plusieurs segments individuels assemblés et est entouré, à son extrémité tournée vers le corps de frein, par un anneau métallique (26, 46) jouant le rôle d'un enroulement de court-circuit.

2. Moteur selon la revendication 1, caractérisé par le fait que les corps conducteurs magnétiques (24) sont insérés chacun, par une extrémité, parallèlement à l'axe de la perforation de stator, dans des rainures (25) du stator.

3. Moteur électrique selon les revendications 1 et 2, caractérisé par le fait que les corps conducteurs magnétiques (44) sont fixés au champ principal (31a) du stator (31) par des vis (45), des rivets ou analogues.

4. Moteur électrique selon les revendications 1 à 3, caractérisé par le fait que les corps conducteurs magnétiques (44) sont glissés sur des parties d'équerre (47) fixées au stator (31) et qui sont fixées au stator (31) par des vis (45) des rivets ou par soudage.

5. Moteur électrique selon les revendications 1 à 4, caractérisé par le fait que le corps de frein est constitué sous forme de plaque d'ancrage (16, 36) présentant deux garnitures de friction (19, 39) disposées à ses extrémités et tournées vers le disque de frein (14, 34), l'arbre de rotor (12, 32) passant à travers la perforation centrale (17, 37) de la plaque d'ancrage (16, 36).

6. Moteur électrique selon les revendications 1 à 5, caractérisé par le fait que la plaque d'ancrage (16, 36) présente deux évidements (21, 41) symétriques autour de l'axe de la perforation (17, 37) et dans lesquels s'engagent deux cames correspondantes (20, 40) fixées à la carcasse (10, 30) du moteur, chaque came (20, 40) étant munie, pour l'application de la plaque d'ancrage (16, 36) d'une surface d'accès biseautée (23, 43).

7. Moteur électrique selon les revendications 1 à 6, caractérisé par le fait que l'arbre de rotor (12, 32) étant disposé verticalement, la plaque d'ancrage (16, 36), dans l'état privé de courant, s'applique avec freinage contre le disque de frein (14, 34) uniquement en vertu de son propre poids.

8. Moteur électrique selon les revendications 1 à 7, caractérisé en ce qu'à la carcasse (30) est fixé un interrupteur (52) dont l'organe d'actionnement (51) est en contact avec une courbe de manœuvre (50) formée sur la plaque d'ancrage (36).

Fig.1

Fig.2

Fig.3

0 043 498

Fig. 4

Fig. 6

Fig. 7

Fig. 5

2